Europäisches Patentamt

European Patent Office

Office européen des brevets

(19)

(11) Publication number: **0 683 408 A1**

(12) **EUROPEAN PATENT APPLICATION**

(21) Application number: **95104701.8**

(22) Date of filing: **30.03.95**

(51) Int. Cl.6: **G02B 6/28**

(30) Priority: **20.05.94 JP 129921/94**

(43) Date of publication of application:
**22.11.95 Bulletin 95/47**

(84) Designated Contracting States:
**DE FR GB**

(71) Applicant: **SEIKOH GIKEN Co., Ltd.**
**286-23, Matsuhidai**
**Matsudo-shi,**
**Chiba-ken (JP)**

(72) Inventor: **Takahashi, Mitsuo**
**1-5, Tokiwadaira 6-chome**
**Matsudo-shi,**
**Chiba-ken (JP)**

(74) Representative: **Zenz, Joachim Klaus,**
**Dipl.-Ing. et al**
**Patentanwälte Zenz, Helber & Hosbach**
**Am Ruhrstein 1**
**D-45133 Essen (DE)**

(54) **Optical fibre multiplexer/demultiplexer having a reflection layer outside of an optical coupling portion.**

(57) An optical fiber multiplexer/demultiplexer having a reflection layer (11) with high reflection coefficient in the optical coupling portion is disclosed. The reflection layer can greatly reduce optical loss which can occur due to leakage of light propagating in optical fibers. Clads of two or more optical fibers (7,8) are fused by heat while said clads are arranged in parallel along the axis thereof and contacted each other at the midpoint thereof and a pair of tapered portions (9,10) are formed by drawing each optical fiber so that the radii of the cores and clads are minimized in the portion where the optical fiber clads contact each other. A film layer (11) with high reflection coefficient is formed on the outer surface of each pair of tapered portions. The film layer with high reflection coefficient is formed by mirror coating of dielectric materials, or evaporation of a metal with high reflection coefficient, i.e., aluminum, gold, or silver film.

FIG. I

## BACKGROUND OF THE INVENTION

### 1. Field of the invention

The present invention relates to an optical multiplexer/demultiplexer which demultiplexes light propagating in an optical fiber circuit into two or more optical fiber circuits or multiplexes light propagating in a multiple of optical fiber circuits into an optical fiber circuit and, more particular to an optical fiber multiplexer/demultiplexer of optical fiber having a reflection layers with high reflection coefficient formed of an out side of a coupling portion where light power loss due to the leakage of light through the outer surfaces of the optical fiber clads into free space greatly be reduced by the reflection layer with high reflection coefficient.

### 2. Prior Art

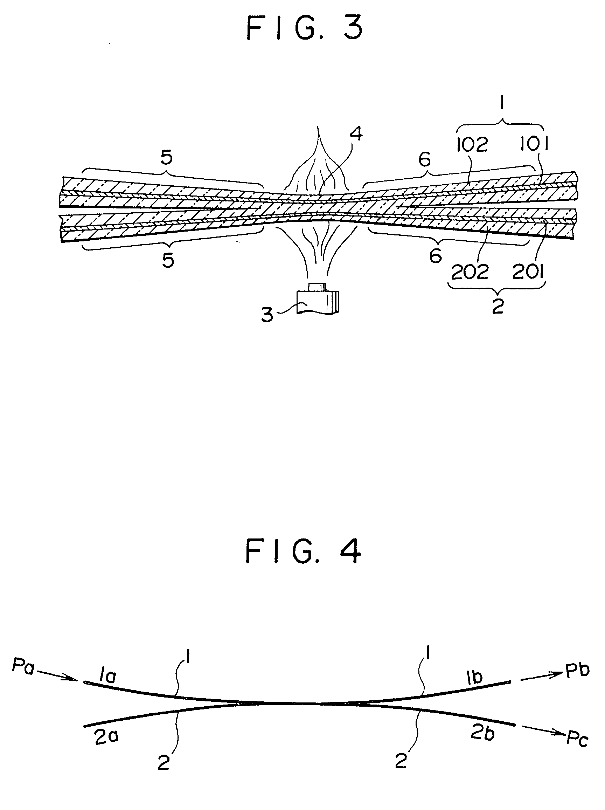

Figure 3 shows a conventional making processes of an optical fiber multiplexer/demultiplexer by drawing and partly fusing optical fibers. The optical multiplexer/demultiplexer of optical fiber, which is shown in Figure 3, consists of a 1x2 matrix circuit which is fabricated by such processes that clads 101, 102 of optical bare fibers 1, 2 are partly fused by heater, i.e., burner 3 while they are partly arranged in parallel along the axis of the multiplexer/demultiplexer. Stripped optical fibers 1, 2 are drawn along the axis thereof at low speed while they are heated and fused. Thereafter, each pair of tapered portions whose midpoint 4 has the minimum radius are formed from each of the optical fibers 1, 2 so that the pair of tapered portions are drawn and fused each other.

A 1x2 optical multiplexer/demultiplexer which has been fabricated by the above processes is inserted into a glass tube (not shown), and held therein with adhesive.

Cores 101, 201 within which light can propagate, and clads 102, 202 which keep light within cores 101, 201 are respectively concentrically arranged. As the radius of an optical fiber is gradually reduced by fusing and drawing the optical fiber, mode radius $\omega$ of each of optical fiber cores 101, 201 is extended.

A change in mode radius $\omega$ due to change of radius "a" in of an optical fiber core of a single-mode optical fiber been cited in "Loss analysis of single-mode file splice", Bell System Technical Journal, Vol.56, No. 5, pp.703 by Marcuse D. (1977).

According to Marcuse, mode radius $\omega$ is given by the following equation when radius a of the optical fiber core changes.

$$\omega = a(0.65 + 1.619/V^{1.5} + 2.879/V^6)$$

where V is the normalized frequency given by

$$V = (2\pi a n_1/\lambda) \cdot \{2(n_1-n_2)/n_1\}^{1/2}$$

where $\lambda(\mu m)$ is the wavelength of the light emitted from a light source, $a(\mu m)$ is the radius of the optical fiber core, $n_1$ is the refractive index of the optical fiber core, and $n_2$ is the refractive index of the optical fiber clad.

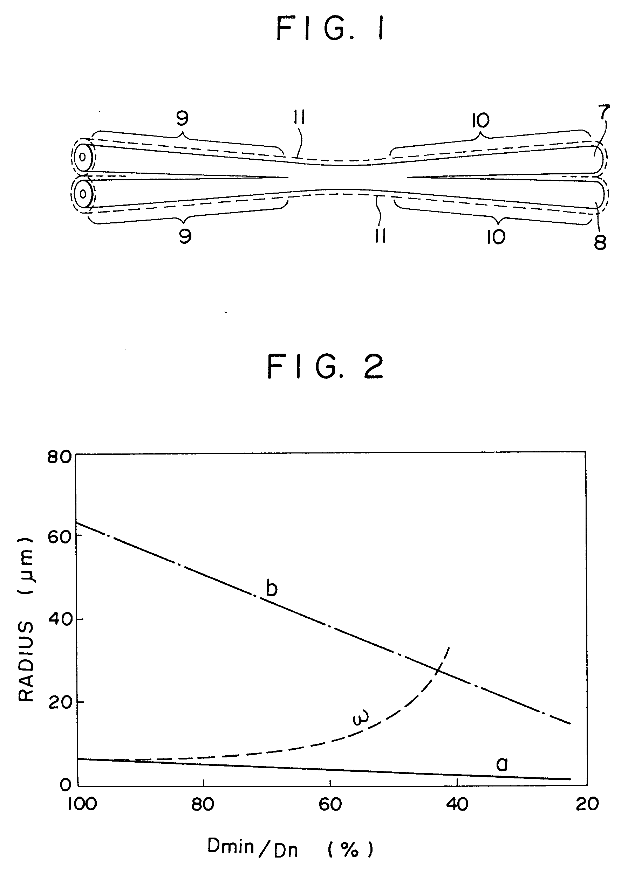

Figure 2 shows the relationships of mode radius ($\omega$), radius (a) of an optical fiber core, and radius (b) of the optical fiber clad as functions of the ratio ($D_{min}/D_n$) of the minimum radius of the core and clad of the tapered portions to those of the normal optical fiber.

When the ratio of the radius of the tapered portion at its minimum point to that of the normal optical fiber is approximately 40% in Figure 2, radius b of the optical fiber clad and mode radius $\omega$ are respectively 27 to 28 $\mu m$, which are the same.

Since the area in the mode radius ($\omega$) is optically regarded as the core area, light propagating within the core goes out to the area of the mode radius ($\omega$). The mode radius ($\omega$) increases as the radius (b) of the clad layer (B) increases. As the mode radius ($\omega$) increases, light propagating within the core is radiated from the outer surface of the clad, which causes light loss when light travels along the tapered portions, Figure 4 shows a schematic diagram of an optical fiber 1x2 optical multiplexer/demultiplexer.

Since the extended mode radii ($\omega$) of optical fibers 1, 2 are overlapped each other in a pair of tapered portions 5, 6, light Pa propagating in a branch 1a of an optical fiber 1 is split into optical fibers 1b, 2b. Due to the overlapping, the optical fiber 1 is optically coupled to the optical fiber 2.

Light Pa appears at a port 1b as light Pb and at a port 2b as light Pc.

Light Pa is greater than light Pb + Pc due to light loss in a pair of the tapered portions 5, 6. The loss EL of optical circuit type is given by

$$EL(dB) = -10\log\{1-(Pb + Pc)/Pa\}$$

The loss of the optical multiplexer/demultiplexer sold in the market is 0.2 to 0.5 dB. The optical multiplexer/demultiplexer having an loss of greater than 0.5dB is thrown away as a defective one.

## SUMMARY OF THE INVENTION

An object of the present invention is to provide an extreamly low loss optical multiplexer/demultiplexer which splits light propagating in an optical fiber into two or more optical fibers, or combines light propagating in a plurality of optical fibers to an optical fiber.

Another object of the present invention is to provide an multiplexer/demultiplexer of optical fiber having a reflection layer with high reflection coefficient in its optical coupling portion which can greatly reduce the optical coupling loss.

The optical fiber multiplexer/demultiplexer of the present invention has the reflection layer with high reflection coefficient in the coupling portion thereof. The reflection layer consists of a film layer with high reflection coefficient on the outer surface of a pair of tapered portions formed by fusing and drawing two or more optical fibers which are arranged in parallel and contacted each other so that the radii of the core and clad are minimized at the midpoint of the fused tapered portions while the clads are fused.

The film layer with high reflection coefficient is made of a mirror coating layer of dielectric materials, or a metal film layer with high reflection coefficient, i.e., aluminum, gold, or silver film.

BRIEF DESCRIPTION OF THE DRAWINGS

Figure 1 shows an embodiment of an optical multiplexer/demultiplexer of optical fiber of the present invention having a reflection layer with high reflection coefficient in the optical coupling portion thereof.

Figure 2 shows the relationships of mode radius ($\omega$), radius (a) of the optical fiber core, and radius (b) of the optical fiber clad as function of the ratio of the minimum radius of the tapered portions to the radius of the normal optical fiber.

Figure 3 shows a process of making of a conventional optical fiber optical multiplexer/demultiplexer.

Figure 4 shows a schematic diagram of a 1x2 optical multiplexer/demultiplexer of optical fiber.

DETAILED DESCRIPTION OF PREFERRED EMBODIMENT

The optical multiplexer/demultiplexer of optical fiber having the reflection layer with high reflection coefficient, in accordance with the present invention, will be described in detail referring to the drawings.

Figure 1 shows an embodiment of a 1x2 optical multiplexer/demultiplexer of optical fiber of the present invention having a reflection layer with high reflection coefficient in an optical coupling portion thereof.

Optical fibers 7,8 in Figure 1 are drawn and fused by heat so that each pair of tapered portions 9,10 are formed on both sides of the midpoint where the radii of optical fibers 9, 10 are minimized. The fabrication process of the tapered portion and a coupling portion are the same as those which have been described referring to Figure 3. Thereafter, a mirror coating layer of dielectric materials 11 with high reflection coefficient, or metal film layer 11 with high reflection coefficient, i.e., aluminum, copper, gold or silver film is evaporated onto the outer surface of the clads of each pair of tapered portions 9, 10.

When film layer 11 with high reflection coefficient has been evaporated onto the outer surface of the clads of tapered portions 7, 8 mode radius $\omega$ is greater than clad radius b. In this case, light Pa, Pb, Pc which propagate within the optical fibers are reflected from the inner surface of film layer 11 with high reflection coefficient and not radiated outside the optical fibers. This causes fewer loss than that in the conventional device described above.

The mirror coating layer of dielectric materials in the optical multiplexer/demultiplexer has a reflection coefficient of 98% or more at an incident angle of 45 degrees or less.

A metal film layer such as copper, gold, or silver film has a reflection coefficient of 98% or more when light is incident on this metal film layer at right angle. For further information, refer to "General Catalog" published by Newport Co., Ltd., page J-62 (1990), and to "Machine Design Handbook" published by Maruzen Co., Ltd., page 89-(1973).

As described heretofore, the optical fiber optical multiplexer/demultiplexer of the invention having the reflection film with high reflection coefficient in the optical coupling portion thereof, is made by the following processes.
Clads of two or more striped optical fibers are fused by heating while the optical fibers are arranged in parallel and contacted each other, the respective pairs of tapered portions are formed by drawing the optical fibers along the axis thereof so that the radii of the cores and clads are minimized in the portion where the clads are contacted each other. Then film layer with high reflection coefficient are formed outside the tapered portions.

The optical multiplexer/demultiplexer of optical fiber having the reflection film with high reflection coefficient outside the optical coupling portion thereof, is made by the conventional process as described above.

As compared with a conventional device which does not have the film layer, the optical multiplexer/demultiplexer of optical fiber of present invention is superior than the conventional device in that light going out of the outer surfaces of the tapered portions can be few compared with that in the conventional device, and thus the loss can greatly be reduced.

Instability or deterioration in optical properties of the optical multiplexer/demultiplexer, caused by the used adhesive, contamination, or humidity around the outer surfaces of the optical fiber clads of the tapered portions, can greatly be reduces by the reflection film layers provided on the outer surface of the clad portion.

In addition, the metal films with high reflection coefficient enhance the mechanical strength of the tapered portions of the optical fibers, which improves the handling capability of the optical fibers, reducing the frequency of failures, and reduce the production cost.

Although the 1x2 optical multiplexer/demultiplexer has been described to explain the present invention, three or more optical fibers can be used to make the optical multiplexer/demultiplexer in accordance with the present invention.

**Claims**

1. An optical multiplexer/demultiplexer comprising:

    an optical coupling portion being formed by such processes that clads of two or more optical fibers (7, 8) are fused by heat while said optical fibers are arranged in parallel along the axis thereof and contacted each other;

    a pair of tapered portions (9, 10) on both sides of said optical coupling portion, the radii of the core and clad are minimized in the portion where said optical fiber cores are contacted; and

    a reflection layer (11) with high reflection coefficient covering the tapered coupling-portion.

2. The optical multiplexer/demultiplexer of optical fiber having a reflection layer (11) with high reflection coefficient in its optical coupling portion, as claimed in Claim 1, wherein

    said reflection layer with high reflection coefficient is formed by mirror coating of dielectric materials, or by the metal film layer, i.e., aluminum, gold, or silver film.

# FIG. 1

# FIG. 2

# F I G. 3

# F I G. 4

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-4 392 712 (T.OZEKI)<br>* column 3, line 29 - line 61; figure 3 *<br>* column 7, line 21 - line 24 *<br>--- | 1,2 | G02B6/28 |
| Y | EP-A-0 447 700 (FUJIKURA)<br>* page 7, line 14 - line 40; figures 6,7 *<br>--- | 1,2 | |
| A | US-A-4 360 248 (G.BICKEL ET AL)<br>* column 2, line 26 - line 37; figures 1,2 *<br>--- | 1,2 | |
| A | PATENT ABSTRACTS OF JAPAN<br>vol. 17 no. 495 (P-1608) ,7 September 1993<br>& JP-A-05 127038 (SHIN ETSU CHEM CO) 25 May 1993,<br>* abstract *<br>----- | 1,2 | |
| | | | TECHNICAL FIELDS SEARCHED (Int.Cl.6)<br><br>G02B |

The present search report has been drawn up for all claims

| Place of search | Date of completion of the search | Examiner |
|---|---|---|
| BERLIN | 7 August 1995 | von Moers, F |